# EUROPÄISCHE PATENTSCHRIFT

(11) **EP 0 844 504 B1**
(45) Veröffentlichungstag und Bekanntmachung des Hinweises auf die Patenterteilung: **16.04.2003**
(21) Anmeldenummer: 97119046.7
(22) Anmeldetag: 31.10.1997
(51) Int. Cl.: G02B 6/44

(54) **Anschlusseinheit für Lichtwellenleiter-Kabel**
Connection box for optical cables
Boîte de connexion pour des cables optiques

(30) Priorität: 21.11.1996 DE 19648294
(43) Veröffentlichungstag der Anmeldung: 27.05.1998
(73) Patentinhaber: CCS Technology, Inc., Wilmington, DE 19803 (US)
(72) Erfinder: Zimmer, Rainer, 58579 Schalksmühle (DE); Lapp, Oliver, 42287 Wuppertal (DE); Hollensett, Kai, 44287 Dortmund (DE); Kluwe, Wolf, 58119 Hagen (DE)
(74) Vertreter: Sturm, Christoph, Dipl.-Ing.

(56) Entgegenhaltungen:
- EP-A- 0 490 609
- WO-A-92/22842
- DE-A- 4 218 378
- DE-U- 9 304 131
- US-A- 4 976 510
- US-A- 5 109 467
- US-A- 5 335 304

## Beschreibung

Die Erfindung betrifft eine Anschluß-Einheit für Lichtwellenleiterkabel sowie eine Anschlußanordnung.

Aus der europäischen Patentanmeldung EP 0 579 019 - A1 ist eine Anschlußeinheit für Lichtwellenleiter-Kabel bekannt, bei der eine Anordnung zum Ablegen von Spleißkassetten für Lichtwellenleiter innerhalb einer Kabelmuffe vorgesehen ist. Eine derartige Anordnung wird dort verwendet, wo Lichtwellenleiter-Spleiße gegen Feuchtigkeit druckdicht geschützt werden müssen. Dieser Aufwand ist jedoch nicht nötig, wenn Anschlüsse an Lichtwellenleiter-Systemen innerhalb von Gebäuden ermöglicht werden sollen.

Aus der US 4,976,510 ist eine Anschlußvorrichtung bekannt, mit einer Rückplatte, die eine darin ausgeformte Öffnung zum Aufnehmen eines Kabels aufweist, einem ersten Satz Seitenwände, der auf der einen Seite der Rückplatte die Öffnung umringend angebracht ist, einem zweiten Satz Seitenwände, der auf der einen Seite der Rückplatte den ersten Satz Seitenwände umringend angebracht ist, einem Satz Pfosten, der auf der einen Seite der Platte außerhalb der Sätze Seitenwände an zwei gegenüberliegenden, ersten Rückplatten-Randseiten angebracht ist und zwischen welche Pfosten Steckeraufnahmen einsteckbar sind, und Kabeleinführöffnungen, die an zwischen den ersten Randseiten verlaufenden zweiten Rückplatten-Randseiten angeordnet sind.

Für vorliegende Erfindung stellt sich die Aufgabe, eine möglichst einfache Anschlußeinheit und eine Anschlußanordnung zum steckbaren Anschluß an Lichtwellenleiter-Systemen zu schaffen, die universell den baulichen Gegebenheiten angepaßt sind und mit denen eine schnelle und unkomplizierte Ankupplung an unter Putz, auf Putz, in Rohr- oder Leitungskanälen verlegten Lichtwellenleiter-Kabeln erstellt werden kann. Die gestellte Aufgabe wird mit einer Anschlußeinheit für Lichtwellenleiter-Kabel bzw. mit einer Anschlußanordnung mit den Merkmalen im Anspruch 1 bzw. 10 gelöst. Vorteilhafte Weiterbildungen der Erfindung sind in den jeweiligen abhängigen Ansprüchen beschrieben; bevorzugte Verwendungen sind in den Ansprüchen 14 und 15 beschrieben.

Besonderer Vorteil an der Anschlußeinheit gemäß der Erfindung ist darin zu sehen, daß sie bei der Erstellung von Anschlüssen an innerhalb von Gebäuden bestehenden Lichtwellenleitersystemen mit Hilfe von Steckerkombinationen in universeller Art eingesetzt werden kann. So eignet sie sich für die Einführung und den Anschluß von Kabeln, die auf Putz, unter Putz, in Rohren oder in Leitungskanälen verlegt sind, gleichermaßen gut; denn die Einführung der Kabelenden kann seitlich, von unten wie von der Mitte her erfolgen. Dabei wird jeweils gewährleistet, daß die bei Lichtwellenleiter-Kabeln minimal zulässigen Biegeradien für Lichtwellenleiter-Fasern von mindestens 30 mm nicht unterschritten wird. Außerdem erfolgt die Führung von Lichtwellenleiter-Überlängen der anzuschließenden Lichtwellenleiter-Fasern in kreisförmig gestalteten Führungskanälen, so daß auch hier eine Unterschreitung des zulässigen Biegeradius nicht möglich ist. Die Kabeleinführungen sind zugleich als Kabelabfangvorrichtungen ausgebildet und sind dabei so angeordnet, daß die Ablage der Überlängen von Lichtwellenleiter-Fasern in zwei entgegengesetzten Richtungen bzw. Windungen erfolgen kann. Auf diese Weise ist es möglich, daß Ausgänge von Lichtwellenleiter-Fasern auch in der Nähe der Kabeleinführung vorgesehen werden können, ohne daß die Gefahr des Abknickens gegeben ist; denn die Zuführung erfolgt durch Einlegen der Lichtwellenleiter-Überlängen in einen Führungskanal in der dafür entsprechenden Einlegerichtung. Die Enden der Lichtwellenleiter-Fasern können auch bereits mit Steckern vorkonfektioniert sein, da sich in der Mitte der Anschlußeinheit eine große Durchführungsöffnung befindet, die so bemessen ist, daß die mit Steckern bereits versehenen Lichtwellenleiter-Faserenden hindurchgeführt werden können. Dabei werden immer die gleichen Kabelabfangvorrichtungen benutzt, so daß keine zusätzlichen Maßnahmen getroffen werden müssen. Auch hier werden die Überlängen in den Führungskanälen in der geeigneten Einlegerichtung abgelegt, wobei entsprechende Niederhalter dafür sorgen, daß die Lichtwellenleiter-Fasern beim Öffnen der Anschlußeinheit nicht herausspringen. Die Stecker an den Enden der Lichtwellenleiter-Fasern werden in Steckerhalterungen gefaßt, die dann in Fixierungen auf dem Basisteil der Anschlußeinheit eingesteckt, vorzugsweise eingerastet werden. Auf diese Weise ist gesichert, daß bei Montagearbeiten die mit Steckern bestückten Steckerhalterungen insgesamt aus der Anschlußeinheit entnommen werden können, um sie beispielsweise einem Spleißgerät zuzuführen. Die Stecker sind mit den Steckerhalterungen in den Fixierungen so arretiert, daß von außen zugeführte Steckanschlüsse mühelos eingesetzt werden können, wobei dann hierfür die entsprechenden Verschlüsse in den Auslässen der Anschlußeinheit je nach Bedarf entfernt werden. Das angeführte Ausführungsbeispiel zeigt im folgenden eine Gestaltung, bei der Anschlußmöglichkeiten für vier Simplex-Stecker oder für zwei Duplex-Stecker vorgesehen sind. Doch können bei Beibehaltung der sonstigen konstruktiven Ausführung auch Anschlußmöglichkeiten für andere Steckersysteme vorgesehen werden, wenn die Steckerhalterungen entsprechend angepaßt sind. Mit einer abgestimmten Abdeckblende kann die Anschlußeinheit gemäß der Erfindung auch direkt auf Leitungskanäle bzw. Rüstungskanäle aufgesetzt werden, so daß keine zusätzlichen Maßnahmen getroffen werden müssen. Dieses direkte Aufsetzen kann auch mit entsprechenden Befestigungsrahmen vorgesehen werden, mit deren Hilfe die Anschlußeinheit jeweils auf der Deckblende aufgeklemmt wird.

Die Erfindung wird nun anhand von vier Figuren näher erläutert.
- Figur 1: zeigt die Anschlußeinheit in geöffnetem Zustand.
- Figur 2: zeigt die Anschlußeinheit beim Einsatz an Kabelkanälen.
- Figur 3: zeigt den Verlauf der Lichtwellenleiter-Überlängen bei seitlicher Kabeleinführung.
- Figur 4: zeigt den Verlauf der Lichtwellenleiter-Überlängen bei mittiger Kabeleinführung.

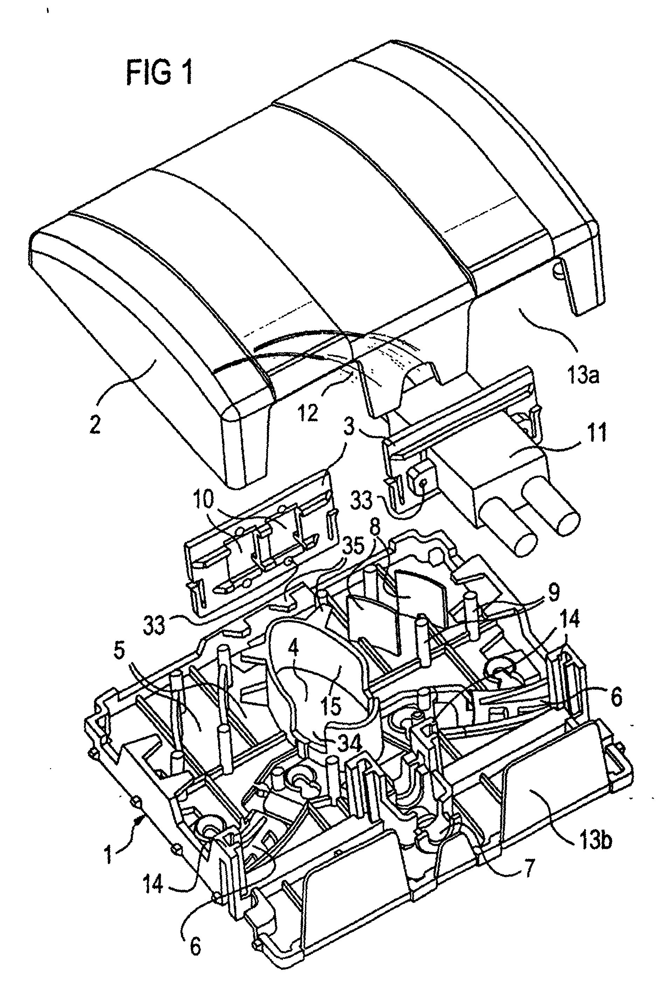

In Figur 1 werden die Einzelteile der Anschlußeinheit gemäß der Erfindung gezeigt, wobei diese in ihrer Lage so skizziert sind, daß sich daraus die endgültige Position erkennen läßt. Die Anschlußeinheit besteht aus dem Basisteil 1, den Steckerhalterungen 3 für die Aufnahme der an den Enden der Lichtwellenleiter angesetzten Stecker und dem Abdeckteil 2, das den Innenraum überdeckt, wobei durch Einführungen 13a die einzuführenden Stecker von Anschlußkabeln eingeführt werden können. Das Basisteil 1 besteht aus der Grundplatte, die mittels verschieden verlaufender Verstrebungen, Rippen und dergleichen versteift ist. Außerdem befinden sich dort Löcher, Rasteinrichtungen und dergleichen, durch die in an sich bekannter Weise universelle Befestigungsmöglichkeiten gegeben sind. Die Kabeleinführungen sind zugleich als Kabelabfangvorrichtungen 6 bzw. 7, z.B. als Klemmhalterungen ausgebildet, wobei davon zwei Kabelabfangvorrichtungen 6 an den Stirnseiten und eine Kabelabfangvorrichtung 7 dazwischen in der Mitte angeordnet sind. Die beiden seitlichen Kabelabfangvorrichtungen 6 sind so gestaltet, daß die Einführung der Lichtwellenleiterkabel von unten her wie auch in gleicher Höhe erfolgen kann, so daß Lichtwellenleiterkabel eingeführt werden können, die auf Putz, unter Putz oder in Rohren oder Kanälen verlegt sind. Eine direkte Einführung kann in der mittigen Kabelabfangvorrichtung 7 vorgenommen werden. Durch Stege 8 oder/und Stifte 9 werden Führungskanäle 5 gebildet, in denen Überlängen von Lichtwellenleiterfasern abgelegt werden können, so daß die Enden der Lichtwellenleiterfasern, die mit Steckern versehen werden oder bereits sind, aus dem Basisteil 1 für Servicezwecke herausgenommen werden können. Die Führungskanäle 5 verlaufen dabei um eine große Einführungsöffnung 4 herum, wobei diese annähernd mittig im Basisteil 1 angeordnet ist. Der Durchmesser der kreisförmig angelegten Führungskanäle 5 ist so groß, daß eine Biegeverletzung der Lichtwellenleiter ausgeschlossen wird (minimaler zulässiger Biegedurchmesser ≥ 30 mm). Die mittige Kabeleinführung 4 ist mit einem Kragen 15 versehen, an dem ebenfalls wie am Rand des Basisteils 1 Niederhalter 35 angebracht sind, die ein Herausspringen von eingelegten Lichtwellenleiterfasern verhindern. Der Kragen 15 hat auch Auslässe 34, die auch bis zur Grundplatte und hin bis zur jeweiligen Kabelabfangvorrichtung 6 ausgebrochen werden können, so daß hierdurch die von unten eingeführten Lichtwellenleiterkabel nach oben geführt werden können. Diese Kabeleinführungsöffnung 4 ist so groß und so geformt, daß auch bereits mit Steckern versehene Lichtwellenleiterkabel bzw. Lichtwellenleiterfasern eingeführt werden können, wobei zunächst die Lichtwellenleiterkabel zu den Kabelabfangvorrichtungen 6 geführt werden. Von dort erfolgt dann die Einlegung der einzelnen Lichtwellenleiterfasern nach Einführung durch die Kabeleinführungsöffnung 4 in die Führungskanäle 5. Die Faserenden der eingelegten Lichtwellenleiterkabel werden oder sind mit Steckern versehen, die nun in Aufnahmen 10 von herausnehmbaren Steckerhalterungen 3 mittels Befestigungsmitteln 33, zum Beispiel Klemmen oder Schrauben, befestigt werden. Durch die Bezeichnung 12 innerhalb der Abdeckung 2 ist die Fassung der Lichtwellenleiterfasern in einem Stecker skizziert. Die Steckerhalterungen 3 werden in Fixierungen 14, zum Beispiel in Nutenführungen, eingesteckt, so daß sie dort in ihrer Lage mechanisch festgelegt sind. Je nach Bedarf werden die Verschlüsse 13b am Basisteil 1 entfernt, so daß dann von außen die Stecker der anzuschließenden Lichtwellenleiterkabel eingeführt und gesteckt werden können. Die Steckerhalterungen 3 können den jeweils verwendeten Steckern angepaßt sein und zum Beispiel Aufnahmen 10 für zwei oder einen Stecker enthalten. Schließlich ist auf dem Basisteil 1 noch die mittige Kabel einführung der Kabelabfangvorrichtung 7 erkennbar, in der zum Beispiel ein auf Putz verlegtes Lichtwellenleiterkabel in an sich bekannter Weise eingeführt und abgefangen wird. Die Abdeckblende 2 kann auf das Basisteil 1 aufgesetzt und vorzugsweise aufgerastet werden.

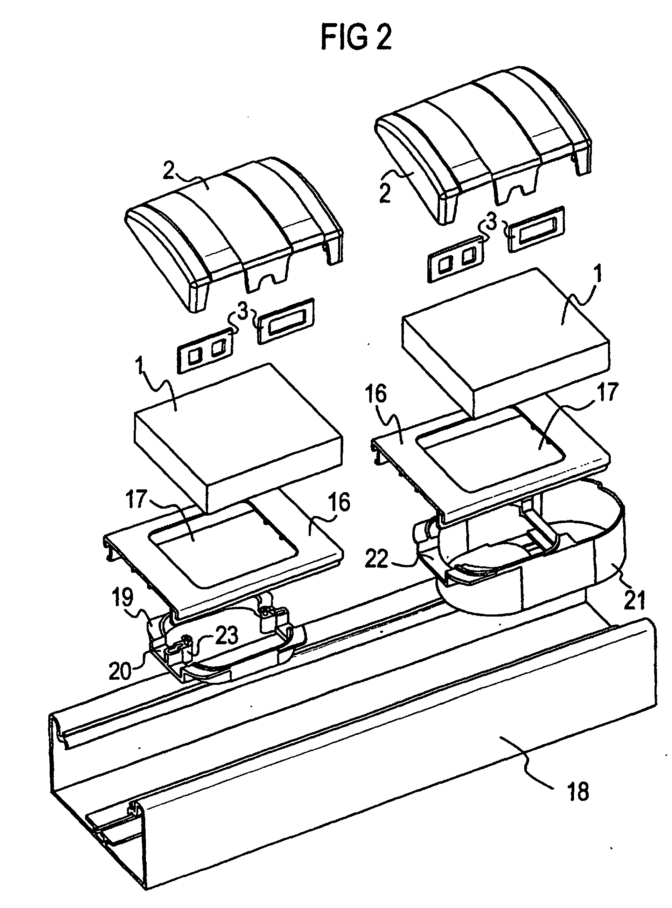

Figur 2 zeigt den Montagevorgang einer Anschlußeinheit gemäß der Erfindung auf einem Leitungs- bzw. Brüstungskanal 18, in dem innerhalb von Gebäuden Lichtwellenleiterkabel verlegt werden. Die Abdeckung des Leitungskanales 18 erfolgt in dem Bereich, in dem eine Anschlußmöglichkeit geschaffen werden soll, mit einer Abdeckblende 16, die auf dem Leitungskanal 18 aufgerastet wird. Diese Abdeckblende 16 ist mit einem Ausschnitt 17 versehen, durch den das anzuschließende Kabel aus dem Leitungskanal 18 heraus in das Basisteil 1 der Anschlußeinheit gemäß der Erfindung geführt wird. Die Befestigung des Basisteils 1 erfolgt entweder direkt oder mit Hilfe eines Befestigungsrahmens 19, der unterhalb der Abdeckblende 16 angeordnet wird und der mit Hilfe von Befestigungsmitteln 23 am oberhalb zu befestigenden Basisteil 1 angeklemmt wird. Seitliche Einführungskanäle 20 im Befestigungsrahmen 19 ermöglichen eine geordnete Einführung des jeweilig auszuführenden Lichtwellenleiterkabels bzw. der Lichtwellenleiterfasern. Diese Ausführung ist im linken Teil dieser Figur 2 dargestellt. Im rechten Teil dieser Figur 2 ist gezeigt, daß hier der Befestigungsrahmen als Behälter 21 mit Einführungen 22 ausgebildet ist. Innerhalb dieses Behälters 21 können nun bereits Überlängen, Spleiße und dergleichen abgelegt werden. Im übrigen erfolgt die weitere Zusammensetzung wie im bereits beschriebenen Ausführungsbeispiel des linken Figurenteils. Ergänzend sind noch die einzuführenden Steckerhalterungen 3 und die Abdeckungen 2 dargestellt, die den weiteren Montageablauf andeuten.

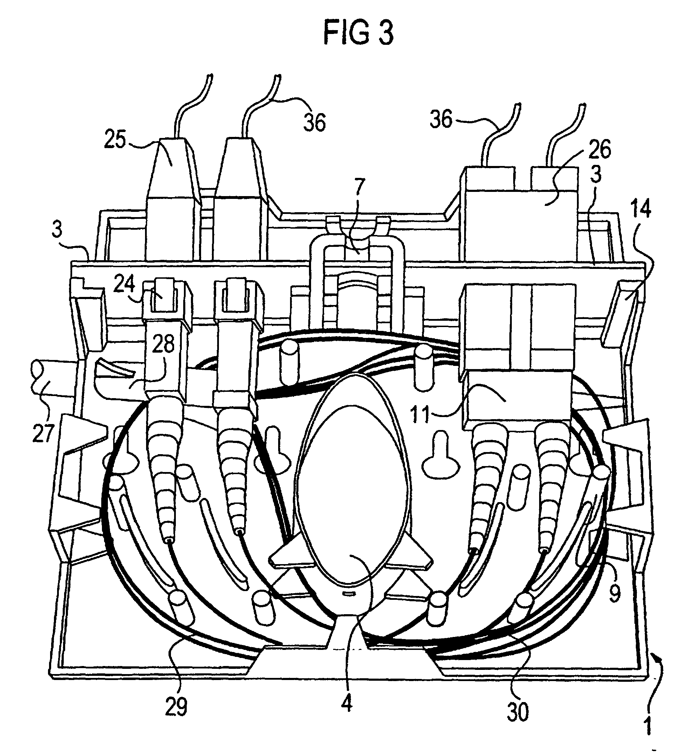

Figur 3 zeigt die Einführung eines Lichtwellenleiterkabels 27 von unten her, das in der Kabelabfangvorrichtung 28 abgefangen wird. Dabei ist ersichtlich, daß diese Kabelabfangvorrichtung 28 so ausgerichtet ist, daß die Lichtwellenleiterüberlängen 29 und 30 in entgegengesetzten Richtungen in einem der durch die Stifte 9 gebildeten Führungskanal geführt werden können. Auf diese Weise ist es möglich, daß Lichtwellenleiterfasern zu beiden seitlichen Positionen der Steckerhalterungen 3 unter Einhaltung des minimal zulässigen Biegeradius für Lichtwellenleiter geführt werden können. Weiterhin ist erkennbar, daß in der linken Steckerhalterung 3 zwei Einzelstecker 24 und in der rechten Steckerhalterung 3 ein Doppelstecker 11 verwendet sind, an die von außen geführte Stekker 25 bzw. 26 von Lichtwellenleiterfasern 36 angeschlossen sind. Die Steckerhalterungen 3 sind auch hier in Fixierungen 14 eingesteckt, aus denen sie für Servicezwecke entnommen werden können.

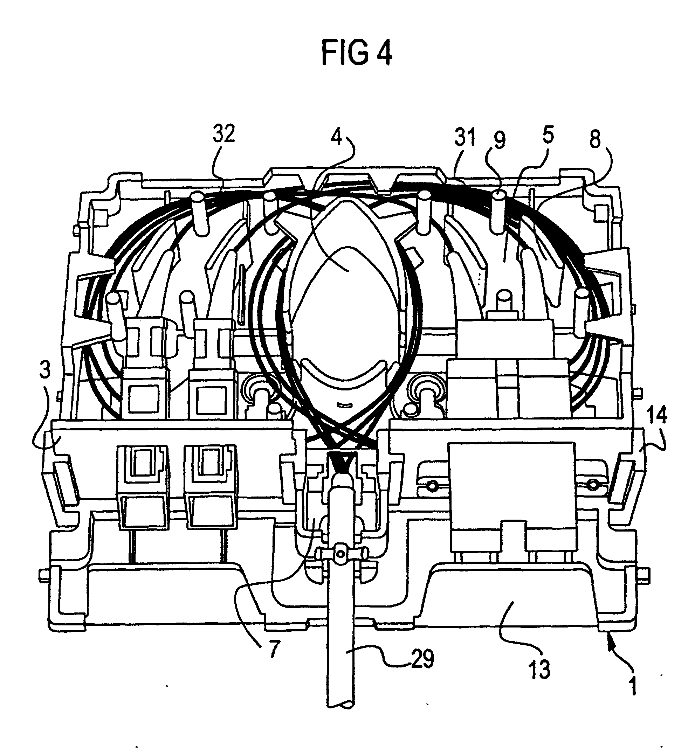

Figur 4 zeigt schließlich die Einführung eines Lichtwellenleiterkabels 29 in der mittig angeordneten Kabelabfangvorrichtung 7, von wo aus ebenfalls die Verlegung der Überlängen 31 und 32 der Lichtwellenleiterfasern in zwei Richtungen innerhalb der Führungskanäle erfolgen kann. Im übrigen sind hier die gleichen Verhältnisse gegeben, wobei hier die Kabeleinführungen zunächst noch durch Verschlüsse 13b abgeschlossen sind.

## Patentansprüche

1. Anschlußeinheit für Lichtwellenleiterkabel, mit einem Basisteil (1), welches eine Grundplatte mit einer darin ausgebildeten, zentralen Durchgangsöffnung (4) zum Durchführen von mit Steckern (11, 24) versehenen Enden von Lichtwellenleiter fasern (29, 30, 11, 24) aufweist und welches an zwei einander gegenüberliegenden, ersten Randseiten mit jeweils einer ersten Kabeleinführung (6, 28) versehen ist, die sich quer zu der jeweiligen ersten Randseite erstreckt, welches Basisteil (1) ferner an einer quer zu den beiden ersten Randseiten verlaufenden zweiten Randseite mit einer mittig angeordneten, zweiten Kabeleinführung (7) versehen ist, die sich quer zu der einen zweiten Randseite erstreckt und die mit einer Kabelabfangung versehen ist, welches Basisteil (1) ferner mit kreisbogenförmig verlaufenden Führungskanälen (5) zur Aufnahme von Überlängen von Lichtwellenleiterfasern (29, 30, 31, 32) versehen ist, welche Führungskanäle (5) um die Durchführungsöffnung (4) herum verlaufend ausgebildet sind, welches Basisteil (1) ferner mit Steckerhalterungen (3) versehen ist, die entlang der einen zweiten Randseite angeordnet sind und die zum Anschluß von Steckern (11, 24) in Richtung quer zu der einen zweiten Randseite vorgesehen sind,
**dadurch gekennzeichnet, dass** die ersten Kabeleinführungen (6) derart ausgebildet sind, dass Lichtwellenleiterkabel sowohl von unten durch die Grundplatte als auch seitlich durch die jeweilige erste Randseite einführbar und mittels einer Kabelabfangung fixierbar sind, dass die Durchgangsöffnung (4) derart ausgestaltet ist, dass durch diese hindurchgeführte Lichtwellenleiterkabel mittels der Kabelabfangungen der ersten Kabeleinführungen (6) fixierbar sind und dass die Steckerhalterungen beidseitig der zweiten Kabeleinführung (7) angeordnet sind.

2. Anschlußeinheit nach Anspruch 1, ferner mit einer Abdeckung (2), die auf das Basisteil (1) rastend aufgesetzt ist.

3. Anschlußeinheit nach einem der vorhergehenden Ansprüche, wobei die Führungskanäle (5) auf dem Basisteil (1) durch Stege (8) und/oder Stifte (9) gebildet sind.

4. Anschlußeinheit nach einem der vorhergehenden Ansprüche, wobei das Basisteil (1) mit Fixierungen (14) versehen ist, in welche die Steckerhalterungen (3) einsteckbar sind.

5. Anschlußeinheit nach einem der vorhergehenden Ansprüche, wobei der Innenradius der Führungskanäle (5) mindestens dem minimal zulässigen Biegeradius der Lichtwellenleiterfasern von mindestens 30 mm entspricht.

6. Anschlußeinheit nach einem der vorhergehenden Ansprüche, wobei die Steckerhalterungen (3) Aufnahmen (10) für zwei einzelne Stecker (24) aufweisen.

7. Anschlußeinheit nach einem der Ansprüche 1 bis 5, wobei die Steckerhalterung (3) eine Aufnahme (10) für einen Doppelstecker (11) aufweist.

8. Anschlußeinheit nach einem der vorhergehenden Ansprüche, wobei das Basisteil (1) Befestigungsmittel für die Wandmontage aufweist.

9. Anschlußeinheit nach einem der vorhergehenden Ansprüche, wobei die Durchführungsöffnung (4 ) mit einem umlaufenden Kragen (15) versehen ist, bei dem seitliche Auslässe (34) bis zu den seitlichen Kabelabfangvorrichtungen (6) ausbrechbar sind.

10. Anschlußanordnung mit einem Leitungskanal (18), der mit einer ihn teilweise abdeckenden Abdeckblende (16) versehen ist, und mit einer Anschlußeinheit nach einem der Ansprüche 1 bis 9, die mit ihrem Basisteil (1) auf der Adeckblende (16) des Leitungskanals (18) befestigt ist, wobei die Abdeckblende (16) einen Ausschnitt (17) zur Durchführung des Lichtwellenleiterkabels aufweist.

11. Anschlußanordnung nach Anspruch 10 wobei das Basisteil (1) mit Hilfe eines Befestigungsrahmens (19) auf der Abdeckblende (16) angeklemmt ist.

12. Anschlußanordnung nach Anspruch 10, wobei der Befestigungsrahmen als Behälter (21) mit einer Einführung (22) zur Aufnahme von Spleißen und/oder Überlängen und Lichtwellenleiterfasern ausgebildet ist.

13. Anschlußanordnung nach einem der Ansprüche 10 bis 12, wobei die Abdeckblende (16) auf den Leitungskanal (18) aufgerastet ist.

14. Verwendung einer Anschlußeinheit nach einem der Ansprüche 1 bis 9 für die Aufputzmontage des Kabels, wobei das Kabel durch die in der Mitte der einen zweiten Randseite des Basisteils (1) angeordnete Kabelabfangvorrichtung (7) eingeführt ist.

15. Verwendung einer Anschlußeinheit nach einem der Ansprüche 1 bis 9 für die Montage des Kabels unter Putz oder für die Montage des Kabels in einem Leitungskanal (18), wobei das Kabel durch eine der auf den ersten Randseiten des Basisteis (1) angeordneten Kabelabfangvorrichtungen (6) eingeführt und abgefangen ist.

## Claims

1. Connection unit for optical waveguide cables, having a base part (1) which has a base plate with a central through-opening (4), which is formed in it, for ends (which are provided with plugs (11, 24)) of optical waveguide fibres (29, 30, 11, 24) to pass through and is provided on two mutually opposite first edge faces with a respective first cable entry (6, 28) which extends transversely with respect to the respective first edge face, which base part (1) is furthermore provided on a second end face, which runs transversely with respect to the two first end faces, with a centrally arranged, second cable entry (7), which extends transversely with respect to the one second end face and is provided with a cable grip, which base part (1) is furthermore provided with guide channels (5), which run in the form of a circular arc, for holding excess lengths of optical waveguide fibres (29, 30, 31, 32), which guide channels (5) are formed such that they run around the through-opening (4), which base part (1) is furthermore provided with plug holders (3) which are arranged along the one second end face and are provided with connection of plugs (11, 24) in a transverse direction with respect to the one second end face, **characterized in that** the first cable entries are designed such that optical waveguide cables can be inserted both from underneath through the base plate and at the side through the respective first end face and can be fixed by means of a cable grip, **in that** the through-opening (4) is designed such that optical waveguide cables which are passed through it can be fixed by means of the cable grips on the first cable entries (6), and **in that** the plug holders are arranged on both sides of the second cable entry (7).

2. Connection unit according to Claim 1, furthermore having a cover (2) which is fitted by latching to the base part (1).

3. Connection unit according to one of the preceding claims, with the guide channels (5) on the base part (1) being formed by webs (8) and/or pins (9).

4. Connection unit according to one of the preceding claims, with the base part (1) being provided with fixings (14) into which the plug holders (3) can be inserted.

5. Connection unit according to one of the preceding claims, with the internal radius of the guide channels (5) corresponding at least to the minimum permissible bending radius of the optical waveguide fibres of at least 30 mm.

6. Connection unit according to one of the preceding claims, with the plug holders (3) having receptacles (10) for two individual plugs (24).

7. Connection unit according to one of Claims 1 to 5, with the plug holder (3) having a receptacle (10) for a double plug (11).

8. Connection unit according to one of the preceding claims, with the base part (1) having attachment means for wall mounting.

9. Connection unit according to one of the preceding claims, with the through-opening (4) being provided with a circumferential collar (15), in which side outlets (34) can be knocked out as far as the side cable gripping apparatuses (6).

10. Connection arrangement having a guide channel (18), which is provided with a covering panel (16) which partially covers it, and having a connection unit according to one of Claims 1 to 9, which is mounted by its base part (1) on the covering panel (16) of the guide channel (18), with the covering panel (16) having a cutout (17) for the optical waveguide cable to pass through.

11. Connection arrangement according to Claim 10, with the base part (1) being clamped on the covering panel (16) with the aid of an attachment frame (19).

12. Connection arrangement according to Claim 10, with the attachment frame being in the form of a container (21) with an entry (22) for holding splices and/or excess lengths and optical waveguide fibres.

13. Connection arrangement according to one of Claims 10 to 12, with the covering panel (16) being latched onto the guide channel (18).

14. Use of a connection unit according to one of Claims 1 to 9 for surface mounting of the cable, with the cable being inserted through the cable gripping apparatus (7), which is arranged in the centre on the one second end face of the base part (1).

15. Use of a connection unit according to one of Claims 1 to 9 for mounting the cable under plaster or for mounting the cable in a guide channel (18), with the cable being inserted and gripped by means of one of the cable gripping apparatuses (6) which are arranged on the first end faces of the base part (1).

## Revendications

1. Boîte de connexion pour des câbles optiques, avec une pièce de base (1), qui présente une plaque de base avec une ouverture de passage (4) centrale formée dans celle-ci pour le passage d'extrémités de fibres optiques (29, 30, 11, 24) pourvues de connecteurs (11, 24) et qui est pourvue sur deux premiers côtés latéraux opposés l'un à l'autre à chaque fois d'une première entrée de câble (6, 28), qui s'étend transversalement au premier côté latéral respectif, pièce de base (1) qui est en plus pourvue sur un deuxième côté latéral orienté transversalement par rapport aux deux premiers côtés latéraux d'une deuxième entrée de câble (7) disposée au centre, qui s'étend transversalement par rapport à un deuxième côté latéral et qui est pourvue d'une attache de câble, pièce de base (1) qui est en outre pourvue de canaux de guidage en arc de cercle (5) destinés à recevoir des surlongueurs de fibres optiques (29, 30, 31, 32), canaux de guidage (5) qui sont formés autour de l'ouverture de passage (4), pièce de base (1) qui est en outre pourvue de supports de connecteurs (3) qui sont disposés le long d'un deuxième côté latéral et qui sont prévus pour le raccordement de connecteurs (11, 24) dans la direction transversale par rapport audit deuxième côté latéral, **caractérisée en ce que** les premières entrées de câble sont formées de telle manière que des câbles optiques puissent être introduits aussi bien par le bas à travers la plaque de base que latéralement à travers le premier côté latéral respectif et puissent être fixés au moyen d'une attache de câble, **en ce que** l'ouverture de passage (4) est configurée de telle manière que des câbles optiques introduits à travers celle-ci puissent être fixés au moyen des attaches de câble des premières entrées de câble (6) et **en ce que** les supports de connecteurs sont disposés de part et d'autre de la deuxième entrée de câble (7).

2. Boîte de connexion suivant la revendication 1, comportant en outre un couvercle (2), qui est posé par encliquetage sur la pièce de base (1).

3. Boîte de connexion suivant l'une quelconque des revendications précédentes, dans laquelle les canaux de guidage (5) sont formés sur la pièce de base (1) par des nervures (8) et/ou des picots (9).

4. Boîte de connexion suivant l'une quelconque des revendications précédentes, dans laquelle la pièce de base (1) est pourvue de fixations (14), dans lesquelles les supports de connecteurs (3) peuvent être engagés.

5. Boîte de connexion suivant l'une quelconque des revendications précédentes, dans laquelle le rayon intérieur des canaux de guidage (5) correspond au moins au rayon de courbure minimal admissible des fibres optiques d'au moins 30 mm.

6. Boîte de connexion suivant l'une quelconque des revendications précédentes, dans laquelle les supports de connecteurs (3) présentent des logements (10) pour deux connecteurs individuels (24).

7. Boîte de connexion suivant l'une quelconque des revendications 1 à 5, dans laquelle le support de connecteur (3) présente un logement (10) pour un connecteur double (11).

8. Boîte de connexion suivant l'une quelconque des revendications précédentes, dans laquelle la pièce de base (1) présente des moyens de fixation pour le montage mural.

9. Boîte de connexion suivant l'une quelconque des revendications précédentes, dans laquelle l'ouverture de passage (4) est pourvue d'un collet périphérique (15), dans lequel des échancrures latérales (34) peuvent être pratiquées jusqu'aux dispositifs latéraux d'attache de câble (6).

10. Dispositif de raccordement avec un canal de ligne (18), qui est pourvu d'un écran de couverture (16) le recouvrant partiellement, et avec une boîte de connexion suivant l'une quelconque des revendications 1 à 9, qui est fixée avec sa partie de base (1) sur l'écran de couverture (16) du canal de ligne (18), l'écran de couverture (16) présentant une découpe (17) pour le passage du câble optique.

11. Dispositif de raccordement suivant la revendication 10, dans lequel la pièce de base (1) est serrée sur l'écran de couverture (16) à l'aide d'un cadre de fixation (19).

12. Dispositif de raccordement suivant la revendication 10, dans lequel le cadre de fixation a la forme d'un récipient (21) avec une entrée (22), destiné à contenir les épissures et/ou les surlongueurs et les fibres optiques.

13. Dispositif de raccordement suivant l'une quelconque des revendications 10 à 12, dans lequel l'écran de couverture (16) est encliqueté sur le canal de ligne (18).

14. Utilisation d'une boîte de connexion suivant l'une quelconque des revendications 1 à 9 pour le montage sur crépi du câble, dans laquelle le câble est introduit à travers le dispositif d'attache de câble (7) disposé au milieu du deuxième côté latéral de la pièce de base (1).

15. Utilisation d'une boîte de connexion suivant l'une quelconque des revendications 1 à 9 pour le montage encastré du câble ou pour le montage du câble dans un canal de ligne (18), dans laquelle le câble est introduit et attaché par un des dispositifs d'attache de câble (6) disposés sur les premiers côtés latéraux de la pièce de base (1).
